# EUROPEAN PATENT SPECIFICATION

(11) **EP 2 795 562 B1**
(45) Date of publication and mention of the grant of the patent: **21.11.2018**
(21) Application number: 12860238.0
(22) Date of filing: 21.12.2012
(51) Int. Cl.: G06Q 40/08

(54) **SYSTEMS AND METHODS FOR ASSESSING OR MONITORING VEHICLE STATUS OR OPERATOR BEHAVIOR**
SYSTEME UND VERFAHREN ZUR BEURTEILUNG ODER ÜBERWACHUNG EINES FAHRZEUGZUSTANDES ODER BEDIENERVERHALTENS
SYSTÈMES ET PROCÉDÉS POUR ÉVALUER OU CONTRÔLER UN ÉTAT DE VÉHICULE OU UN COMPORTEMENT D'OPÉRATEUR

(30) Priority: 21.12.2011 US 201161578511 P; 28.03.2012 US 201261616722 P; 25.05.2012 US 201261652017 P; 16.11.2012 US 201213679749; 16.11.2012 US 201213679722; 16.11.2012 US 201213679771; 20.12.2012 US 201261740290 P
(43) Date of publication of application: 29.10.2014
(73) Proprietor: Scope Technologies Holdings Limited, Bryanston, Johannesburg (ZA); Fuchs, Gil, 74010 Nes Tziona (IL)
(72) Inventor: FUCHS, Gil, 74010 Nes Tziona (IL); LAVIE, Samuel, Bryanston Johannesburg (ZA); JACOBS, Friedl, Bryanston Johannesburg (ZA); VAN DEN BERGH, Johann, Bryanston Johannesburg (ZA)
(74) Representative: Turner, Craig Robert
(86) International application number: PCT/US2012/071487
(87) International publication number: WO 2013/096908

(56) References cited:
- US-A1- 2004 153 362
- US-A1- 2005 131 597
- US-A1- 2009 210 257
- US-A1- 2010 087 985
- US-A1- 2010 131 304
- US-A1- 2011 106 370
- US-A1- 2011 307 188
- US-B1- 6 282 496
- US-B1- 7 715 961
- HON LUNG CHU ET AL: "Poster", MOBISYS '11, ACM, US, 28 June 2011 (2011-06-28), pages 397-398, XP058004607, DOI: 10.1145/1999995.2000054 ISBN: 978-1-4503-0643-0
- G. Stein ET AL: "Compact Vibration Measuring System for in-vehicle Applications", Measurement Science Review, vol. 11, no. 5, 29 October 2011 (2011-10-29), XP055421653, DOI: 10.2478/v10048-011-0030-1

## Description

### Claim of Priority:

This application claims the benefit of priority to U.S. Provisional Patent Application titled "SYSTEM AND METHOD FOR USE OF PATTERN RECOGNITION IN ASSESSING OR MONITORING VEHICLE STATUS OR OPERATOR DRIVING BEHAVIOR"; Application No. 61/578,511, filed December 21, 2011; U.S. Provisional Patent Application titled "SYSTEM AND METHOD FOR USE WITH AN ACCELEROMETER TO DETERMINE A FRAME OF REFERENCE"; Application No. 61/616,722, filed March 28, 2012; U.S. Provisional Patent Application titled "SYSTEM AND METHOD FOR CHARACTERIZING DRIVER PERFORMANCE AND USE IN DETERMINING INSURANCE COVERAGE"; Application No. 61/652,017, filed May 25, 2012; U.S. Provisional Patent Application titled "SYSTEM AND METHOD FOR USE OF CARBON EMISSIONS IN CHARACTERIZING DRIVER PERFORMANCE"; Application No. 61/740,290, filed December 20, 2012; U.S. Patent Application titled "SYSTEM AND METHOD FOR USE OF PATTERN RECOGNITION IN ASSESSING OR MONITORING VEHICLE STATUS OR OPERATOR DRIVING BEHAVIOR"; Application No. 13/679,722, filed November 16, 2012; U.S. Patent Application titled "SYSTEM AND METHOD FOR USE WITH AN ACCELEROMETER TO DETERMINE A FRAME OF REFERENCE"; Application No. 13/679,749, filed November 16, 2012; and U.S. Patent Application titled "SYSTEM AND METHOD FOR CHARACTERIZING DRIVER PERFORMANCE AND USE IN DETERMINING INSURANCE COVERAGE"; Application No. 13/679,771, filed November 16, 2012 .

### Field of the Disclosure

The disclosure is generally related to telematics and related technologies, and are particularly related to systems and methods for use of pattern recognition in assessing or monitoring a current status of a vehicle, use of an accelerometer to determine a frame of reference, and characterizing of driver performance and its use in determining insurance coverage.

### Background:

Telematics generally refers to the integration of telecommunications and informatics, and is often described in the context of sending and receiving information about moving objects by means of telecommunication devices. A well-known use of telematics is in regard to vehicles, and with control of moving vehicles, such as haulage trucks. Devices such as Global Positioning Systems (GPS) can be used to provide additional information beyond that provided by the vehicle itself. Telematics are of particular use in industries such as fleet management, which might also include tracking the location and operation of ships, trains, and planes.

Telematics information such as that provided by GPS is largely macro in nature, and does not necessarily reflect the micro-conditions of day-to-day driving. As such, conventional telematics information is generally less pertinent for monitoring casual vehicle users, and is typically not intended for providing information of particular interest to insurers, such as the number of passengers in a vehicle at the time of an accident.

Accelerometers are also sometimes used to determine vectors of acceleration or the change in speed of a particular, e.g., vehicle or other equipment. However, a problem arises when the accelerometer is not properly aligned with, or calibrated against a true dimension, such as the true forward direction of a vehicle, since the measurements obtained may not accurately reflect the operation of the vehicle. Compensating for such discrepancies can be complex, requiring computationally expensive calculations of angle cosines, and the resultant accelerometers can be difficult to install and maintain, and in some instances it may not be possible to mathematically compensate for the discrepancies.

Information about a vehicle, together with its driver, also has a bearing on factors such as liability insurance. For example, heavily-used vehicles are on the road more often, which means they potentially have more exposure to accidents. Additionally, certain drivers may have driving habits that are considered less safe than others. Information about these and other factors is useful when formulating insurance quotes for a particular vehicle or driver.

These are the general areas that embodiments of the invention are intended to address.

US2009/0210257 discloses systems and methods for monitoring driving behavior and providing feedback to the driver taking into account individual characteristics of the driver.

US2011/0307188 discloses a method and system for collecting and evaluating driving related data using one or more sensors associated with a hand-held mobile device to automatically collect the driving data and to calculate metrics related to the driver's driving behavior.

US2010/0087985 discloses driving pattern recognition.

The document "Poster: You Driving? Talk to You Later" (Hon Lung Chu et al, MobiSys '11) discloses the use of a mobile phone positioned in a driver's pocket to detect data related to an embarkment by sensing the user's movements.

The document "Compact Vibration Measuring System for in-vehicle Applications" (G.J. Stein et al, Measurement Science Review, Vol. 11, No. 5, 2011) discloses the measurement of vibrations of a vehicle seat by an accelerometer.

### SUMMARY

The invention provides a system according to claim 1.

Described herein is a system and method which uses pattern recognition in assessing or monitoring a vehicle status and/or an operator's driving behavior. A vehicle, for use by an operator or driver, can be equipped with a data collection and assessment system. The system can comprise one or more data collection devices, e.g., accelerometers, which can be used to capture data and information, or otherwise measure vehicle actions. A data communication module enables communication of the collected data and information, such as through the use of telematics, to one or more other systems, which can be local or onboard to the vehicle, or a remote system. A pattern recognition module is configured with one or more defined operating patterns, each of which operating patterns reflects either a known change in vehicle status corresponding to, e.g., when a passenger has embarked or disembarked the vehicle, or a known vehicle operating or driving behavior. Information collected as events describing a current vehicle status or a current driving behavior can be compared with the known operating patterns. In accordance with an embodiment, the information can then be used locally or communicated to an operator assessment and monitoring system or service, which can provide additional functionality, such as ensuring a driver's compliance with employment or other mandated driving requirements, or assessing a drivers suitability for insurance reasons, including, e.g., taking into account a drivers reactions to variations in the road, cornering, and other driving situations.

Also described herein is a system and method for use with a device that includes an accelerometer, which can be used to determine a frame of reference for the device relative to a moving vehicle or other equipment, and which can be subsequently used in assessing or monitoring the status of the vehicle or an operator thereof. In accordance with an embodiment, by sampling accelerometer data over a period of time, the system can determine a rotation matrix or skew between the device/accelerometer's orientation and understanding of direction, and the vehicle's true orientation or direction in three-dimensions. The information can be used to provide corrections to the accelerometer data, and to more accurately determine the vehicle's true orientation/direction and motion within a three-dimensional frame of reference.

Also described herein is a system and method for characterizing driver performance and using such characterization to determine a risk score and/or profile associated with a particular insured. The risk profile/score can then be used to determine an insurance premium for the insured. In accordance with an embodiment, a driver can use a portable device equipped with a data collection and assessment environment, including one or more data collection devices that can be used to capture data and information or otherwise measure vehicle actions, and a data collection and assessment logic. The data collection and assessment environment can provide information to the driver about their driving performance, which the driver can then use to improve their driving skills. The information can also be used by the driver when obtaining liability insurance quotes. In accordance with an embodiment a framework (system) receives information about the driver's driving performance, and uses this information either to determine an insurance quote, or act as a broker/aggregator in inviting other insurance providers to offer an insurance quote. This allows the insurance quote to be better personalized to the driver themselves. In particular, the framework enables the driver to collect his own behavior data and provide that data to an insurer or insurance broker/aggregator, to receive a usage based insurance quote (UBI).

Also described herein is a system and method for use of carbon emissions in characterizing driver performance and using such characterization to determine a profile associated with a particular insured. The profile can then be used to determine an insurance premium for the insured. In accordance with an embodiment, a driver can use a portable device equipped with a data collection and assessment environment, including one or more data collection devices that can be used to capture data and information or otherwise measure the carbon emissions associated with a vehicle. A framework (system) can receive information about the driver's driving profile, and use this information either to determine an insurance quote, or act as a broker/aggregator in inviting other insurance providers to offer an insurance quote, or UBI.

### Brief Description of the Figures:

**Figure 1** shows an illustration of a system which uses pattern recognition in assessing or monitoring a vehicle status or an operator's driving behavior .
**Figure 2** shows another illustration of a system which uses pattern recognition in assessing or monitoring a vehicle status or an operator's driving behavior.
**Figure 3** shows another illustration of a system which uses pattern recognition in assessing or monitoring a vehicle status or an operator's driving behavior.
**Figure 4** shows an illustration of a system which uses pattern recognition in assessing or monitoring a vehicle status or an operator's driving behavior, as it may be used with a vehicle and driver.
**Figure 5** shows another illustration of a system which uses pattern recognition in assessing or monitoring a vehicle status or an operator's driving behavior.
**Figure 6** shows an illustration of examples of data to be used with pattern recognition in assessing or monitoring a vehicle status or an operator's driving behavior.
**Figure 7** shows a flowchart of a method of using pattern recognition in assessing or monitoring a vehicle status or an operator's driving behavior.
**Figure 8** illustrates a system for use with an accelerometer to determine a frame of reference.
**Figure 9** illustrates a means for determining a frame of reference.
**Figure 10** further illustrates a means for determining a frame of reference .
**Figure 11** is a flowchart of a method for determining a frame of reference .
**Figure 12** is a flowchart of a method for calibrating and using a frame of reference.
**Figure 13** is a flowchart of a method for calibrating and using a frame of reference.
**Figure 14** is a flowchart of a method for calibrating and using a frame of reference.
**Figure 15** is a flowchart of a method for calibrating and using a frame of reference.
**Figure 16** is a flowchart of a method for calibrating and using a frame of reference.
**Figure 17** illustrates a system for characterizing driver performance and use in determining insurance coverage .
**Figure 18** illustrates use of a system for characterizing driver performance.
**Figure 19** illustrates use of an insurance provider and/or broker framework.
**Figure 20** is a flowchart of a method for characterizing driver performance and use in determining insurance coverage .
**Figure 21** illustrates a system for use of carbon emissions in characterizing driver performance and use in determining insurance coverage.
**Figure 22** illustrates use of a system for use of carbon emissions in characterizing driver performance .
**Figure 23** illustrates use of an insurance provider and/or broker framework.
**Figure 24** is a flowchart of a method for use of carbon emissions in characterizing driver performance and use in determining insurance coverage.

### Detailed Description:

The disclosure is generally related to telematics and related technologies, and are particularly related to systems and methods for use of pattern recognition in assessing or monitoring a current status of a vehicle, use of an accelerometer to determine a frame of reference, and characterizing of driver performance and its use in determining insurance coverage.

### PATTERN RECOGNITION

In accordance with an embodiment, described herein is a system and method which uses pattern recognition in assessing or monitoring events describing a current vehicle status, comprising when an operator or a passenger has embarked or disembarked the vehicle, and optionally events describing an operator's current driving behavior. The information can be used locally or communicated to an operator assessment and monitoring system or service, which can provide additional functionality, such as ensuring a driver's compliance with employment or other mandated driving requirements, or assessing a drivers suitability for insurance reasons, including, e.g., taking into account a drivers reactions to variations in the road, cornering, and other driving situations.

Although many of the illustrations provided herein describe systems using vehicles and accelerometers, it will be evident that the systems and techniques described herein can be used with operator-controlled devices other than vehicles, such as trains and ships, and with other types of data collection devices.

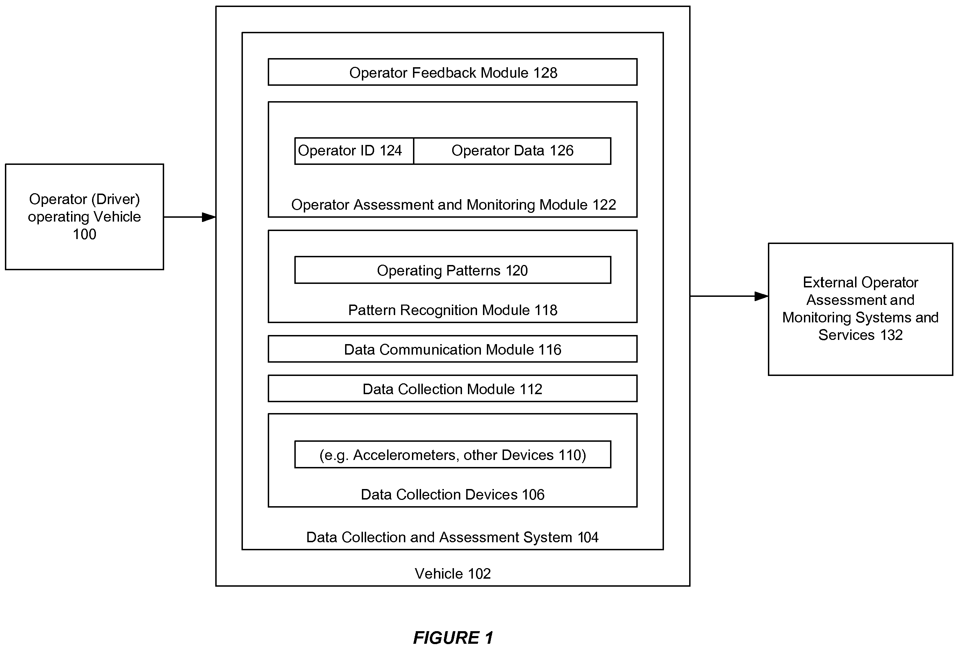

**Figure 1** shows an illustration of a system which uses pattern recognition in assessing or monitoring a vehicle status. As shown in Figure 1, in accordance with an embodiment, a vehicle 102, for use by an operator or driver 100, can be equipped with a data collection and assessment system 104. The system comprises one or more data collection devices 106 (accelerometers) that can be used to capture data and information, or otherwise measure vehicle actions. A data collection module 112 collects the data or information from the data collection devices, while a data communication module 116 enables communication of the collected data and information, such as through the use of telematics, to one or more other systems.

A pattern recognition module 118 is configured with one or more defined operating patterns 120, each of which operating patterns reflects a known change in vehicle status corresponding to when a passenger has embarked or disembarked the vehicle. For example, when an operator embarks a vehicle on the driver's side, the vehicle responds in a physically-measurable manner (e.g., by moving downwards momentarily or tilting to one side). When a passenger then embarks the same vehicle, perhaps from an opposite side or through the rear doors, the vehicle responds in a physically-measurable manner, albeit with a different pattern. Each discernible pattern or set of events reflects a known change in the vehicle status. A sequence of patterns can reflect, as in the above example, that the vehicle, or its vehicle status, now likely includes both the operator and the passenger. Similar physically-measurable patterns can reflect when the operator or passenger leaves or disembarks a vehicle.

A vehicle also responds in a physically-measurable manner to operator-based driving actions, e.g. by the operator turning the vehicle sharply at a corner. This enables the system to associate other events and patterns with an operator's driving behavior.

Sequences of patterns can be used to reflect changes both in the vehicle status and in the operator's driving behavior over a period of time, say from the time an operator embarks the vehicle, through a series of driving maneuvers, up until the time of a later accident.

In an example system, an operator assessment and monitoring module 122 includes information about one or more vehicle operators, including for each operator an identifier (ID) 124 and additional data or information 126 describing that operator and/or their typical operating characteristics. An operator feedback module 128 can be used to provide immediate or local feedback to the operator depending on their current vehicle status and/or operator driving behavior.

Any resultant information, pattern matching, or driver feedback can also be remotely communicated to an external operator assessment and monitoring system or service 132, which can provide additional functionality, such as ensuring a driver's compliance with employment or other mandated driving requirements, or assessing a driver's suitability for insurance reasons.

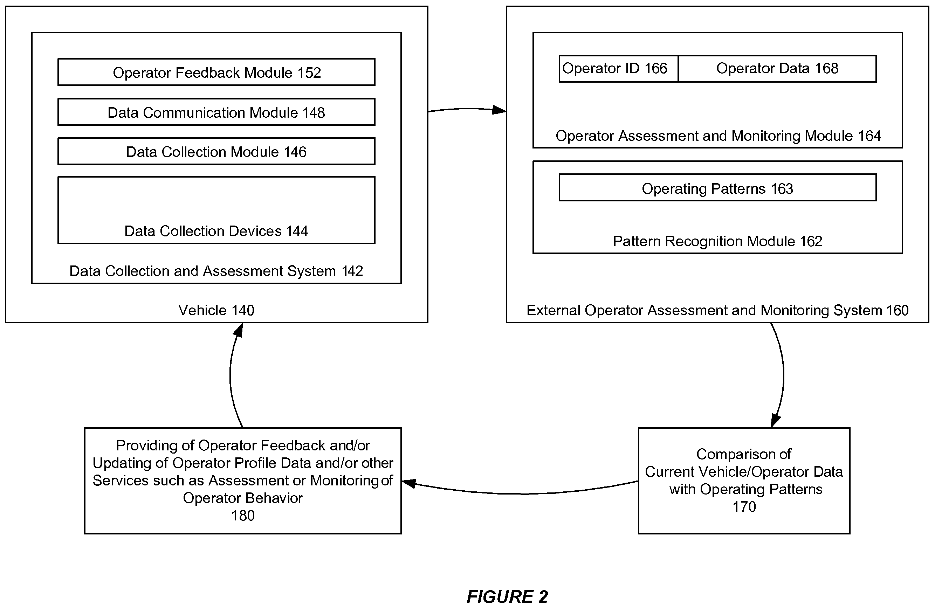

**Figure 2** shows another illustration of a system which uses pattern recognition in assessing or monitoring a vehicle status or an operator's driving behavior, . As shown in Figure 2, depending on the particular implementation, a selection of the components of the system can be provided onboard or locally to the vehicle, while others of the components can be provided elsewhere separately or remotely from the vehicle, or by a third-party. For example,
, the vehicle 140 can include a collection and assessment system 142 that comprises one or more data collection devices 144, a data collection module 146, a data communication module 148, and an operator feedback module 152. An external operator assessment and monitoring system or service 160, which in this example is provided separately from the vehicle, can include a pattern recognition module 162 configured with one or more defined operating patterns 163, and an operator assessment and monitoring module 164 that includes information about one or more vehicle operators, including for each operator an operator ID 166 and additional data or information 166.

Different arrangements of modules/components can be provided in accordance with different embodiments to suit particular implementations. In some embodiments, the pattern recognition module can be provided onboard or locally to the vehicle, to provide immediate or local feedback to the operator depending on a current status of their vehicle and/or their current driving behavior, without a need for an external system or service. For example, a system including local feedback might determine that too many passengers have embarked the vehicle for preferred safe driving, and communicate this information to the operator prior to them starting the vehicle.

As further shown in Figure 2, the information collected describing a current vehicle/operator status or driving pattern can be compared 170 with known operating patterns, and the results of the comparison used in providing operator feedback and/or updating operator profile data and/or providing other services such as assessment or monitoring of operator behavior 180.

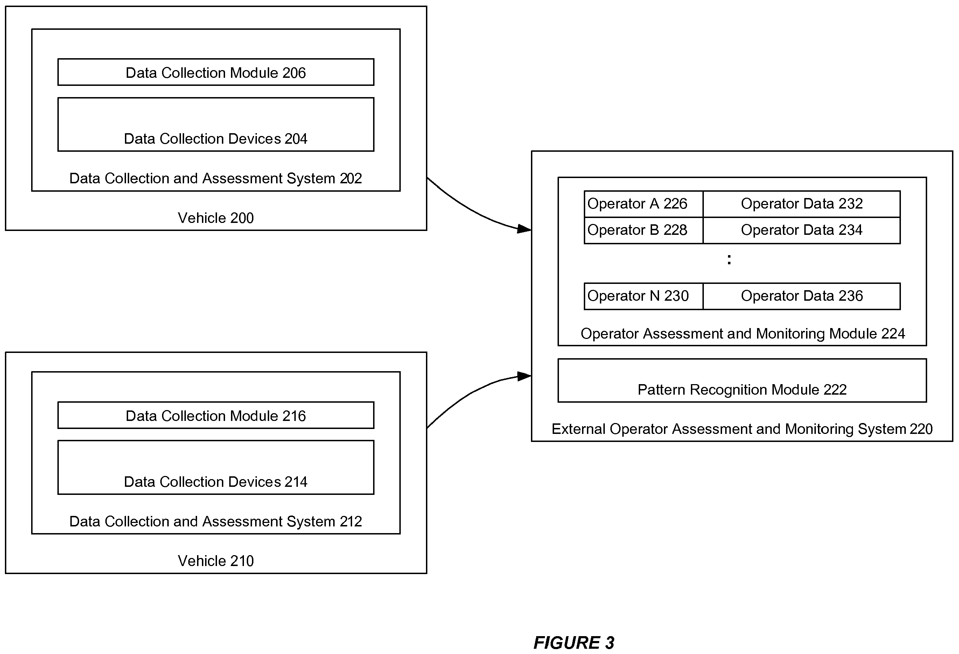

**Figure 3** shows another illustration of a system which uses pattern recognition in assessing or monitoring a vehicle status or an operator's driving behavior . As shown in Figure 3, depending on the particular implementation, the system can be used to assess and monitor a plurality of vehicles or their operators. In accordance with an embodiment, each vehicle 200, 210 comprises a data collection and assessment system 202, 212 that comprises one or more data collection devices 204, 214 (e.g., accelerometers), and a data collection module 206, 216. An external operator assessment and monitoring system or service 220 that includes a pattern recognition module 222 further comprises an operator assessment and monitoring module 224 that includes information about a plurality of vehicle operators, including for each operator an identifier (ID) 226, 228, 230 and additional data or information 232, 234, 236 describing that operator or their operating characteristics.

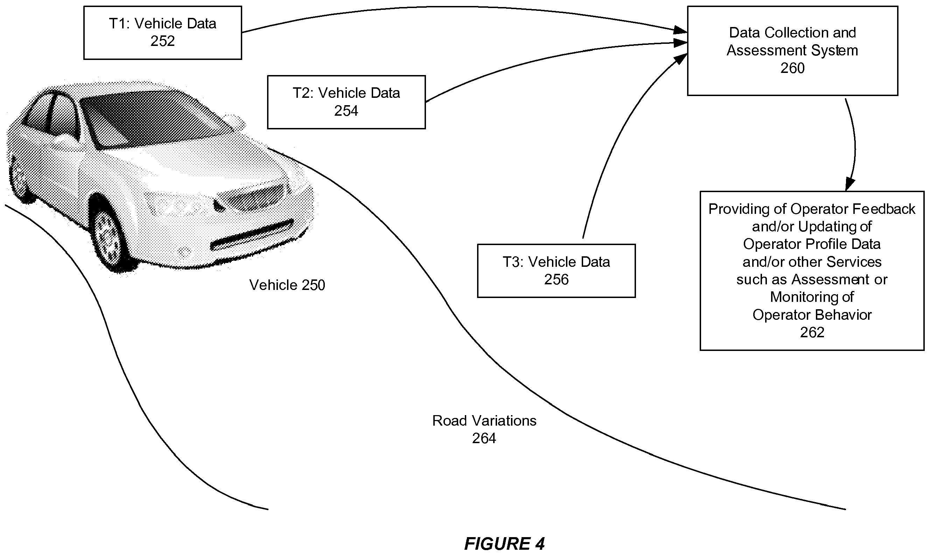

**Figure 4** shows an illustration of a system which uses pattern recognition in assessing or monitoring a vehicle status or an operator's driving behavior, as it may be used with a vehicle and driver. As shown in Figure 4, while a vehicle 250 is used, and as events happen or as time passes T1 (252), T2 (254), T3 (256), current vehicle/operator data is communicated to a data collection and assessment system 260 (which as described above can be provided onboard to the vehicle or remotely via telematics). The information can then be used by or communicated to an operator assessment and monitoring system or service 262, which can provide additional functionality, such as ensuring a driver's compliance with employment or other mandated driving requirements, or assessing a drivers suitability for insurance reasons, including, e.g., taking into account a drivers reactions to variations in the road 264, cornering, and other driving situations.

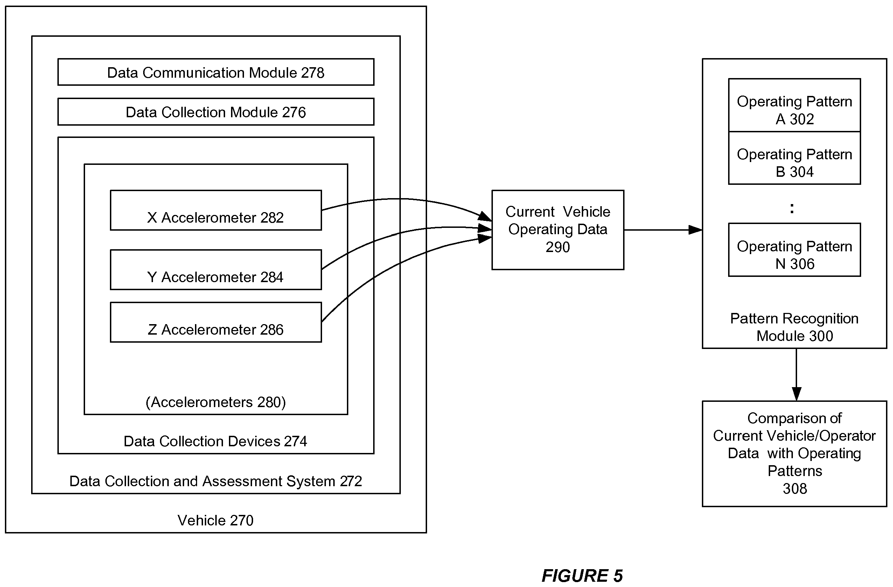

**Figure 5** shows another illustration of a system which uses pattern recognition in assessing or monitoring a vehicle status or an operator's driving behavior . As shown in Figure 5, in accordance with an embodiment the vehicle 270 can be equipped with a data collection and assessment system 272, including a data collection module 276, data communication module 278, and accelerometers 280 as data collection devices 274, or similar devices used to measure changes in acceleration or direction of a vehicle. Information can be collected from a plurality of (in the illustrated example) X 282, Y 284, and Z 286 axis-measuring accelerometers, and collectively used to provide a current vehicle/operator data 290. The pattern recognition module 300 can be configured with one or more defined operating patterns 302, 304, 306, each of which reflects a known vehicle/operator status or driving pattern based on accelerometer data. The information provided regarding current vehicle/operator accelerometer-based-data can be compared with the known accelerometer-based operating patterns, and the results of the comparison used providing of operator feedback and/or updating of operator profile data and/or other services such as assessment or monitoring of operator behavior.

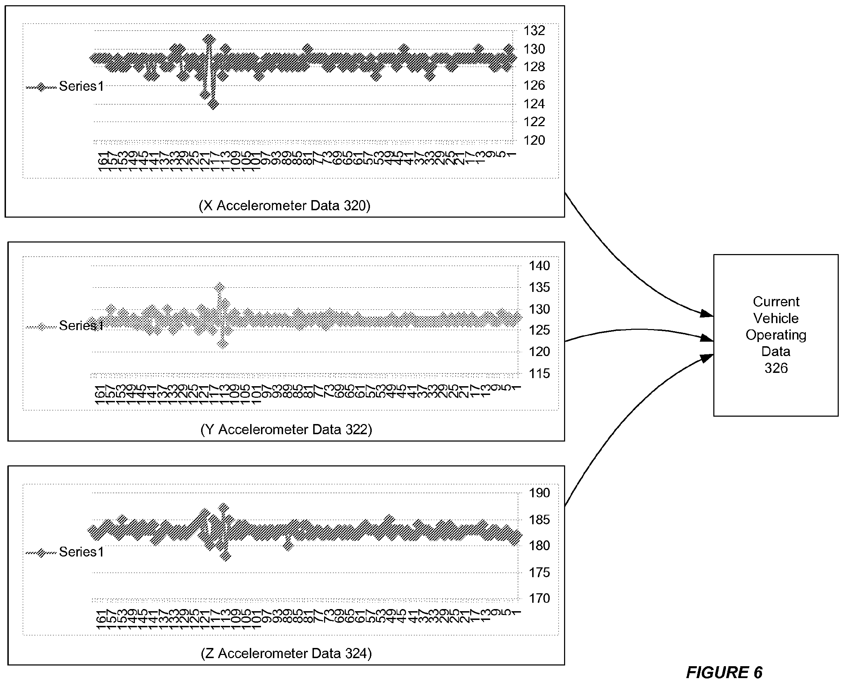

**Figure 6** shows an illustration of examples of data to be used with pattern recognition in assessing or monitoring a vehicle status or an operator's driving behavior . As shown in Figure 6, the data collection and assessment system utilize accelerometers, or similar devices used to measure changes in acceleration or direction of a vehicle, information can be collected from a plurality of X, Y, and Z axis-measuring accelerometers (320, 322, 324), and collectively used to provide a current vehicle/operating data 326. For example, as described above, when an operator or passenger embarks or disembarks a vehicle on the driver's side, the vehicle responds in a physically-measurable manner. The accelerometers can detect the minor accelerations in the vehicle when a person enters the car and closes the door, takes a corner or brakes sharply, or drives in a manner considered unsafe. The information collected describing a current vehicle/operator status or driving pattern can be compared with known operating patterns, and the results of the comparison used in providing operator feedback and/or updating operator profile data and/or providing other services such as assessment or monitoring of operator behavior 328.

As further shown in Figure 6, each of the graphs 320, 322, 342 can show accelerations in the X, Y, and Z axes respectively for a stationary vehicle. Each time a passenger enter/exits the vehicle and the engine is on, the system registers a low amplitude up and down motion hovering around value 128 +-2 units for a non-event average, followed by a minor perturbation simultaneous in all three axes where the amplitude jumps above the "normal" amplitude. The system can recognize these up and down characteristics as a known pattern.

Further discernment can include, e.g. recognizing minor variations in the pattern to determine the vehicle being pushed to the left, representative of an entry on the right side; or the vehicle being pushed forward and to the right, representative of an entry to the left-rear side. Information such as this can be used to ensure a driver's compliance with employment or other mandated driving requirements, or assessing a drivers suitability for insurance reasons, including, e.g. preventing insurance fraud. detecting patterns and then using occurrences of said patterns when they occur, to say with some level of confidence (a confidence coefficient) that an event of certain type occurred, which is particularly useful for post-accident investigations.

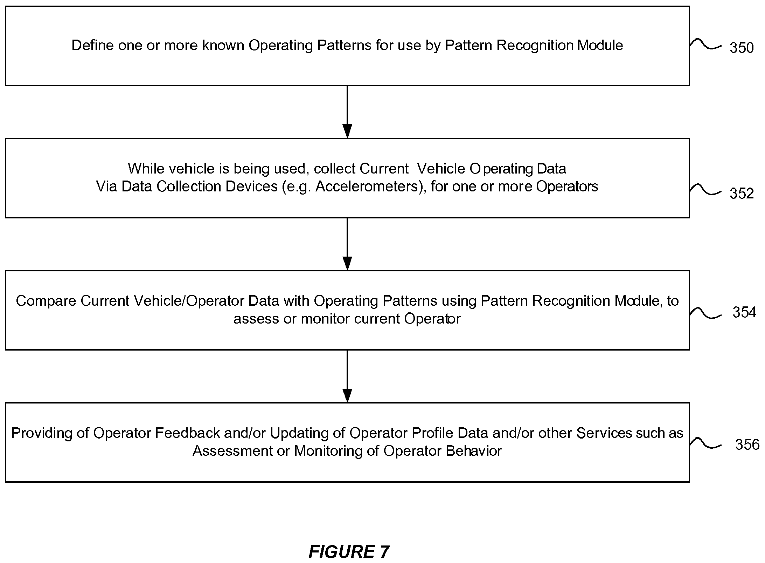

**Figure 7** shows a flowchart of a method of using pattern recognition in assessing or monitoring a vehicle status or an operator's driving behavior . As shown in Figure 7, at step 350, one or more known operating patterns are defined for use by the pattern recognition module. At step 352, while the vehicle is being used, current vehicle operating data is collected via data collection devices (e.g. accelerometers), for one or more operators. At step 254, the current vehicle/operator data is compared with operating patterns using pattern recognition module, to assess or monitor current operator. At step 356, the system provides operator feedback and/or updates of operator profile data and/or provides other services such as assessment or monitoring of operator behavior.

The above-described systems and methods can be employed in a variety of use cases. For example, the system can be used in conjunction with an automatic rescue or emergency dispatch system, wherein information about the number of passengers in a vehicle can be automatically communicated to a central rescue or emergency service. As another example, the system can be used in conjunction with systems for parental or otherwise tracking the habits of younger drivers, e.g. to ensure that the number of passengers within a vehicle is kept within certain predefined limits, or for vehicle insurance purposes.

### USE OF ACCELEROMETER TO DETERMINE FRAME OF REFERENCE

As described above, in the field of telematics, a problem arises when accelerometers are used but are not properly aligned with, or calibrated against a true dimension, such as the true forward direction of a vehicle, since the measurements obtained may not truly reflect the operation of the vehicle.

Described herein is a system and method for use with a device that includes an accelerometer, which can be used to determine a frame of reference for the device relative to a moving vehicle or other equipment, and which can be subsequently used in assessing or monitoring the status of the vehicle or an operator thereof.

The system can be provided as a small device which in turn can be mounted to e.g., the interior of a vehicle, and which includes one or more accelerometers. Since a vehicle generally travels in a horizontal plane, by sampling accelerometer data over a period of time, and also referring to information from one or more other on-board devices, such as a GPS, gyroscope or additional accelerometer, the system can first determine where the vehicle is "on the plane", i.e. determine the vehicle's true x-y plane inasmuch as it differs from the device/accelerometer's orientation and understanding of the plane. Given the knowledge of the x-y plane, the vehicle's z-axis can be readily determined in that the z-axis is perpendicular to the x-y plane. Next, to determine the vehicle's x-axis, data from the accelerometer, optionally in combination with the information from the other on-board devices, is used to determine the vehicle's forward direction.

Since a vehicle's most prevalent acceleration is in a forward direction (while in contrast its most prevalent deceleration is in the opposite direction), a vehicle's instances of braking provides a particularly discernible change in acceleration/deceleration. By averaging the accelerometer data over several braking instances, the system can determine the vehicle's forward motion along a y-axis. Given the knowledge of the y-axis, the vehicle's x-axis can be readily determined in that it lies within the x-y plane, perpendicular to the y-axis (in other words, mutually perpendicular to both the y and z axes).

The resultant determinations can be stored as a rotation matrix that reflects the skew, represented either in Cartesian or polar coordinates, between the device/accelerometer's orientation and understanding of direction, and the vehicle's true orientation or direction in three-dimensions. The information can be used to provide corrections to the accelerometer data, and to more accurately determine the vehicle's true orientation/direction and motion within a three-dimensional frame of reference.

Although the above approach can be employed to first determine the frame of reference's x-y plane, followed by its z-axis, y-axis, and lastly x-axis, it will be evident that the various axes can be determined in a different order, e.g., first the x-y plane, followed by the x-axis, and finally the y and z axes. The particular order is dependent on the particular desired implementation, but the net result (i.e., the determination of those axes that comprise the frame of reference) is otherwise the same.

Also, it will be evident that the above approach works only while the system is itself mounted to or otherwise fixed in position relative to the vehicle while the vehicle is moving. If, during use, the system was free to move relative to the vehicle, then it could not serve as an accurate frame of reference. However to account for occasional movement of the device, whenever a particular trip is finished, and subsequently a new trip is started at a later time, the system can be quickly reset and recalibrated using the above technique, to allow for occasions in which the system is removed from the vehicle between trips.

Information from the system regarding the motions of the vehicle in three dimensions can be used, for example, as an input to another system or process for determining operator behavior, such as that described in U.S. Provisional Patent Application titled "SYSTEM AND METHOD FOR USE OF PATTERN RECOGNITION IN ASSESSING OR MONITORING VEHICLE STATUS OR OPERATOR DRIVING BEHAVIOR", Application No. 61/578,511, filed December 21, 2011. As described therein, information about the vehicle's maneuvers can be used in combination with known operating patterns to determine or assess an operator's driving pattern.

Although the illustrations provided herein primarily describe using vehicles, it will be evident that the techniques described herein can be similarly used with, e.g., trains, ships, airplanes, containers, or other moving equipment. Additionally, the techniques described herein can be used in combination with other systems, such as those that use dead-reckoning techniques, to provide additional types of combined information.

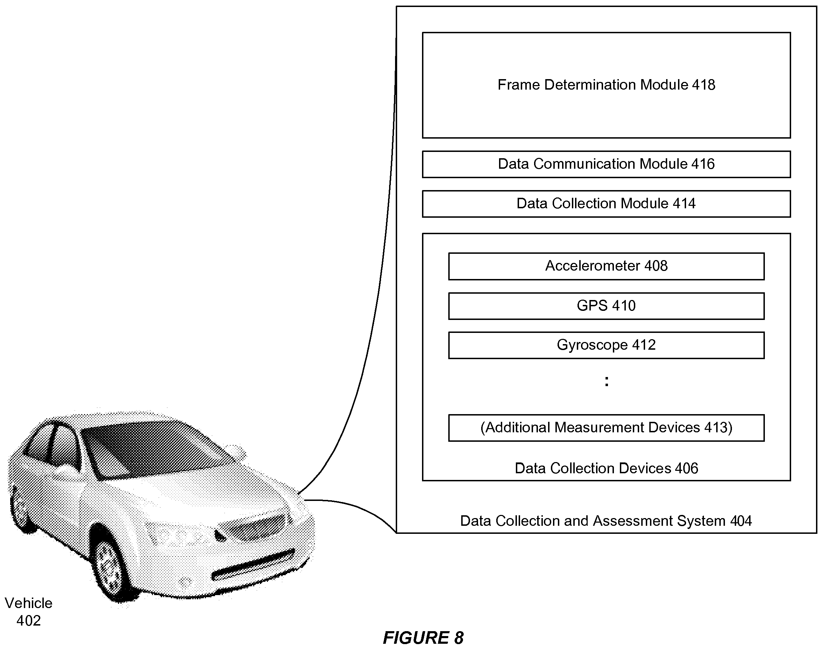

**Figure 8** illustrates a system for use with an accelerometer to determine a frame of reference. As shown in Figure 8, a vehicle 402 can be equipped with a data collection and assessment system 404. The data collection and assessment system, which as described above is provided as a small device mounted to the interior of a vehicle, comprises one or more data collection devices 406, accelerometers 408. Optionally other measurement devices, such as an on-board GPS 410, gyroscope 412, or additional measurement devices 413, can also be used to provide data or information about the vehicle's maneuvers. A data collection module 414 collects the data or information from the data collection devices, while a data communication module 416 enables communication of the collected data and information, such as through the use of telematics, to one or more other systems, such as an external system for assessing an operator's driving pattern. A frame determination module 418 samples or otherwise receives accelerometer data over a period of time, and also information from the one or more other on-board devices, and uses this information to determine the frame of reference.

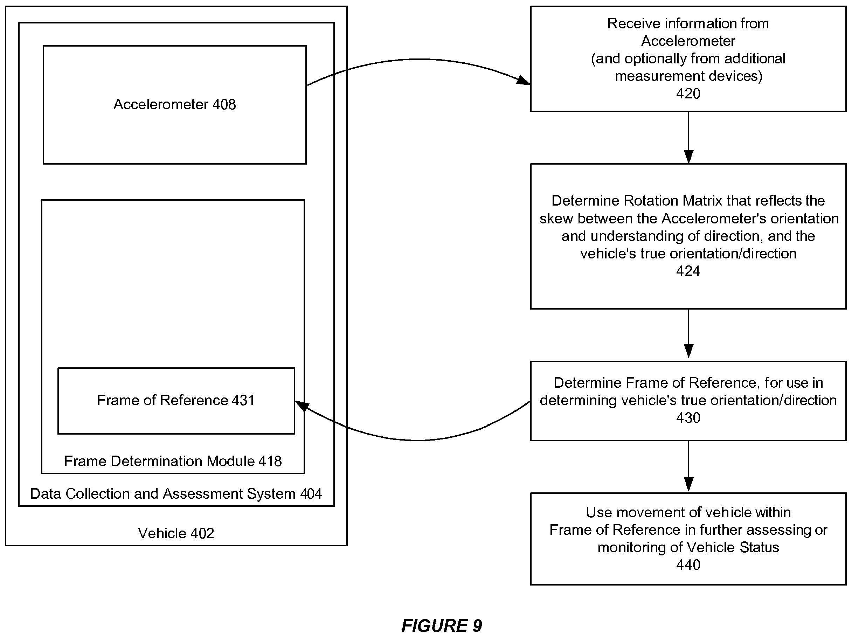

**Figure 9** illustrates a means for determining a frame of reference
. As shown in Figure 9, as the vehicle moves, the system receives data or information 420 from the accelerometer (and optionally from any additional measurement devices provided). This information is used by the frame of reference determination module to determine a rotation matrix or skew 424 between the device/accelerometer's orientation and understanding of direction, and the vehicle's true orientation or direction in three-dimensions, and to more accurately determine the vehicle's true orientation/direction and motion within a three-dimensional frame of reference 430. The movement of the vehicle within the frame of reference can be used, e.g., in combination with known operating patterns as described above, to determine or assess an operator's driving pattern 440.

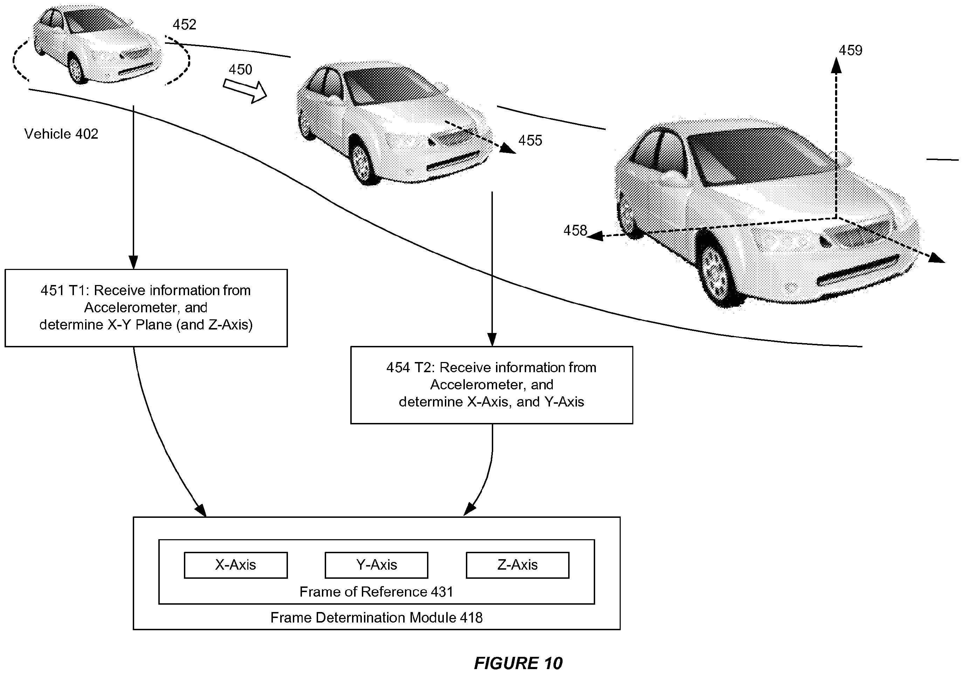

**Figure 10** further illustrates a means for determining a frame of reference . As shown in Figure 10, as the vehicle moves 450, at a time T1, data is received 451 from the accelerometer and from one or more other on-board devices, such as a GPS, gyroscope or additional accelerometer, and is used to determine an x-y plane for the vehicle 452, taking into account that the vehicle generally travels horizontally and by averaging the accelerometer data over a period of time. Given the knowledge of the x-y plane, the vehicle's z-axis can be readily determined in that the z-axis is perpendicular to the x-y plane. At a later time T2, data received 454 from the accelerometer is used to determine a y-axis 455, by averaging the accelerometer data over several braking instances. Given the knowledge of the z and y axes, the vehicle's x-axis can be readily determined.

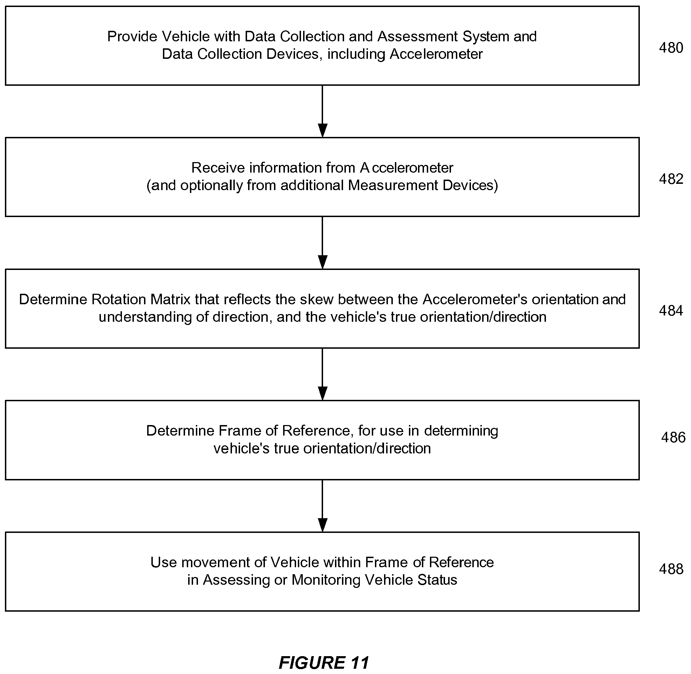

**Figure 11** is a flowchart of a method for determining a frame of reference . As shown in Figure 11, at step 480, a vehicle is provided with a data collection and assessment system and data collection devices, including an accelerometer. At step 482, the system receives information from the accelerometer (and optionally from additional measurement devices), and, at step 484, determines a frame of reference, including first an x-y plane; and then an x-axis, y-axis and z-axis. At step 486, the movement of the vehicle within the frame of reference is used in assessing or monitoring the vehicle status.

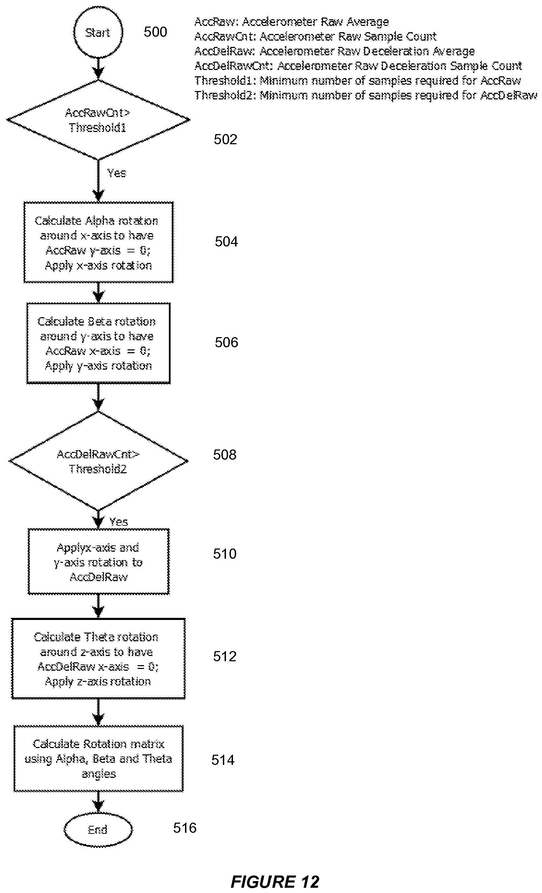

**Figures 12-16** are flowcharts of methods for calibrating and using a frame of reference. The examples shown therein are provided for purposes of illustration, and it will be evident that different steps can be used.

As shown in Figures 12-16, the rotation matrix skew can be indicated by alpha, beta, and theta components, which represent the necessary correction between the device/accelerometer's orientation and understanding of direction, and the vehicle's true orientation or direction in three-dimensions.

Different ways of representing skew can be used.

As shown in Figure 12, at start 500, the following variables are initially defined:
AccRaw: Accelerometer Raw Average
AccRawCnt: Accelerometer Raw Sample Count
AccDelRaw: Accelerometer Raw Deceleration Average
AccDelRawCnt: Accelerometer Raw Deceleration Sample Count
Threshold1: Minimum number of samples required for AccRaw
Threshold2: Minimum number of samples required for AccDelRaw

At step 502, the system determines whether AccRawCnt > Threshold1. If it is, then, at step 504, a value is calculated for Alpha rotation around the x-axis, to have AccRaw y-axis = 0; and to apply x-axis rotation. At step 506, a value is calculated for Beta rotation around the y-axis, to have AccRaw x-axis = 0; and to apply y-axis rotation. At step 508, the system determines whether AccRawCnt > Threshold2. If it is, then, at step 510, an x-axis and y-axis rotation is applied to AccDelRaw. At step 512, a value is calculated for Theta rotation around the z-axis, to have AccDelRaw x-axis = 0; and to apply z-axis rotation. At step 514, a rotation matrix is calculated using the Alpha, Beta and Theta angles. The process then ends 516.

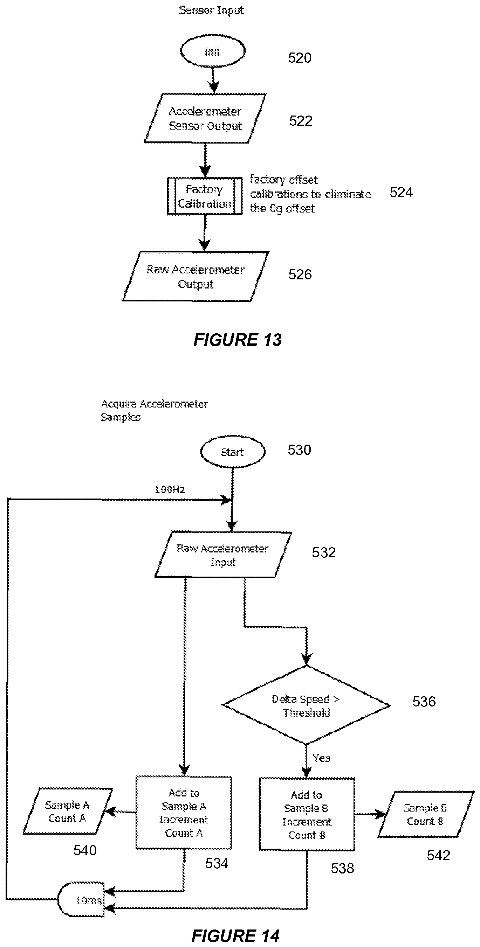

Figure 13 illustrates a system calibration process
. As shown in Figure 13, at step 520 the process is initialized. At step 522, the accelerometer output is received. At step 524, the system applies any factory offset calibrations, to eliminate any 0g offset. At step 526, the raw accelerometer output can then be provided 526.

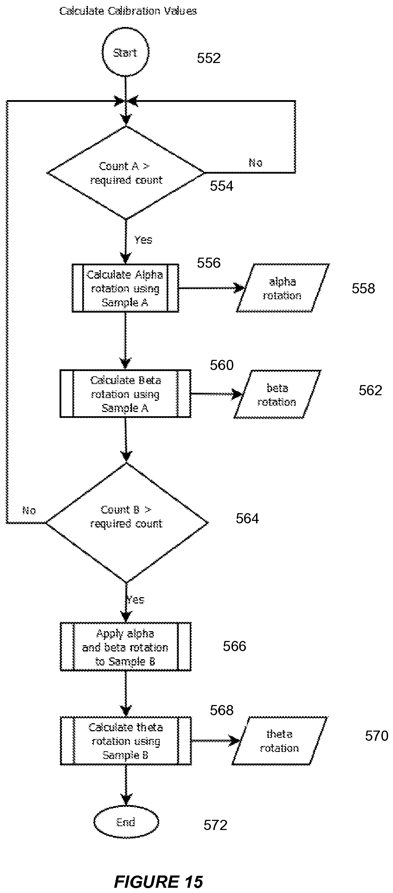

Figures 14 and 15 illustrate a data sampling process . As shown in Figure 15, the process starts 530 by acquiring accelerometer samples, including raw accelerometer input 532. The input is added both at steps 534, 536 to a sample A, which is incremented, and at step 536 if the acceleration is greater than a threshold value (Delta Speed > Threshold) to a sample B 538 542, which is incremented. The counts can be compared at regular intervals.

As shown in Figure 15, following start 552, at step 554, Count A is compared to a required count, and if greater, the Alpha rotation is determined 556, 558 using the Sample A, and the Beta rotation is determined 560, 562 using the Sample A. At step 564, Count B is compared to a required count, and if greater, then at step 566 Alpha and Beta rotation are applied to Sample B, and the Theta rotation is determined 568, 570 using the Sample B. The process then ends 572.

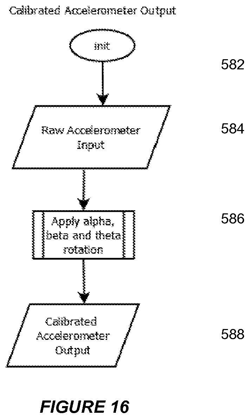

Figure 16 illustrates a calibrated accelerometer output process . As shown in Figure 16, at step 582 the process is initialized. At step 584, the raw accelerometer input is received. At step 586, the system applies the Alpha, Beta and Theta rotations. At step 588, the calibrated accelerometer output can then be provided 526.

### CHARACTERIZING OF DRIVER PERFORMANCE

As described above, in the insurance industry, information about such factors as whether a driver of a vehicle observes safe driving habits is useful when formulating insurance quotes for a particular vehicle or driver.

Described herein is a system and method for characterizing driver performance and using such characterization to determine a risk score and/or profile associated with a particular insured. The risk profile/score can then be used to determine an insurance premium for the insured. In accordance with an embodiment, a driver can use a portable device (e.g., a smartphone, PDA, computer or other device) equipped with a data collection and assessment environment, including one or more data collection devices (e.g., accelerometers, GPS) that can be used to capture data and information or otherwise measure vehicle actions, and a data collection and assessment logic (e.g., a downloadable software application).

The data collection and assessment environment can provide information to the driver about their driving performance, such as whether they make rapid braking/acceleration maneuvers, or drift outside of their lane, which the driver can then use to improve their driving skills.

The information can also be used by the driver when obtaining liability insurance quotes. In an example a framework (system) receives information about the driver's driving performance, and uses this information either to determine an insurance quote, or act as a broker/aggregator in inviting other insurance providers to offer an insurance quote. This allows the insurance quote to be better personalized to the driver themselves. In particular, the framework enables the driver to collect his own behavior data and provide that data to an insurer or insurance broker/aggregator, to receive a usage based insurance quote (UBI).

The system and the driver performance information can be used to augment traditional insurance application questionnaires. The information received from a driver's data collection and assessment environment can be secured and/or anonymized prior to determining the driver's insurance quote, or inviting other insurance providers to offer an insurance quote.

In a typical implementation, a less-safe (i.e., "bad") driver, as determined by their driving performance, may not receive any benefit in providing their information. However, a safer (i.e., "good") driver, as determined by their driving performance, may receive a discount on their insurance quote that reflects their better performance.
The framework can also be used to consider periodic improvements, and provide additional insurance discounts to the driver over time.

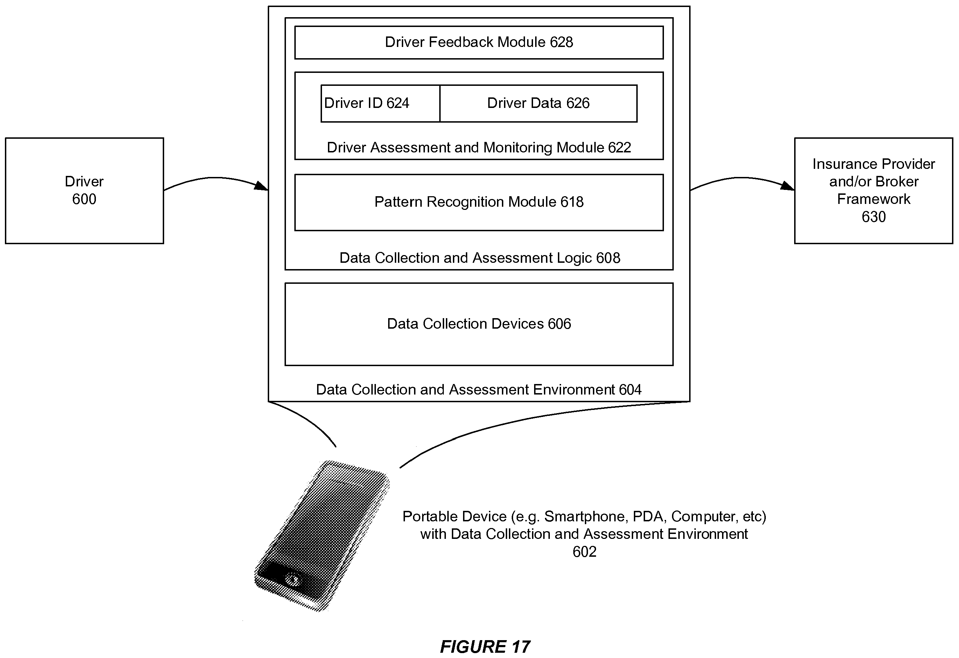

**Figure 17** illustrates a system for characterizing vehicle driver performance and use in determining insurance coverage.

As shown in Figure 17, a driver 600, can use a portable device 602 (e.g., a smartphone, PDA, computer, or other device) which is equipped with a data collection and assessment environment 604.
The portable device can itself include one or more data collection devices 606 (e.g., accelerometers, GPS, or other measurement devices) that can be used to capture data and information or otherwise measure vehicle actions.

The data collection devices can be added to the portable device, e.g., as an aftermarket accessory.

A data collection and assessment logic 608 can similarly be built-into the portable device, or added as an aftermarket accessory, e.g., as a downloadable software application (app).

A pattern recognition module 618 is configured with one or more defined operating patterns, each of which operating patterns reflects either a known change in vehicle status, or a known vehicle operating or driving behavior. For example, a vehicle responds in a physically-measurable manner to driver-based driving actions, e.g., by the driver turning the vehicle sharply at a corner. This enables the system to associate patterns with a driver's driving behavior, and to determine a risk score and/or profile associated with a particular driver. Sequences of patterns can be used to reflect changes both in the vehicle status and in the driver's performance, i.e., their driving behavior over a period of time, say from the time a driver embarks the vehicle, through a series of driving maneuvers, up until the time they disembark the vehicle, or over a period of days, weeks or months.

A driver assessment and monitoring module 622 includes information about one or more drivers, including for each driver an identifier (ID) 624 and additional data or information 626 describing that driver and/or their typical operating characteristics. A driver feedback module 628 can be used to provide immediate or local feedback to the driver depending on their current vehicle status and/or driving performance.

The resultant information, pattern matching, or driver feedback can be remotely communicated to an external insurance provider and/or broker framework (system) 630, which uses the received information in determining insurance quotes for a particular vehicle or driver, or inviting other insurance providers to offer an insurance quote for the particular vehicle or driver. In particular, the framework enables the driver to collect his own behavior data and provide that data to an insurer or insurance broker/aggregator, to receive a usage based insurance quote (UBI).

The system can incorporate or utilize additional functionality as further described in U.S. Provisional Patent Application titled "SYSTEM AND METHOD FOR USE OF PATTERN RECOGNITION IN ASSESSING OR MONITORING VEHICLE STATUS OR OPERATOR DRIVING BEHAVIOR", Application No. 61/578,511, filed December 21, 2011.

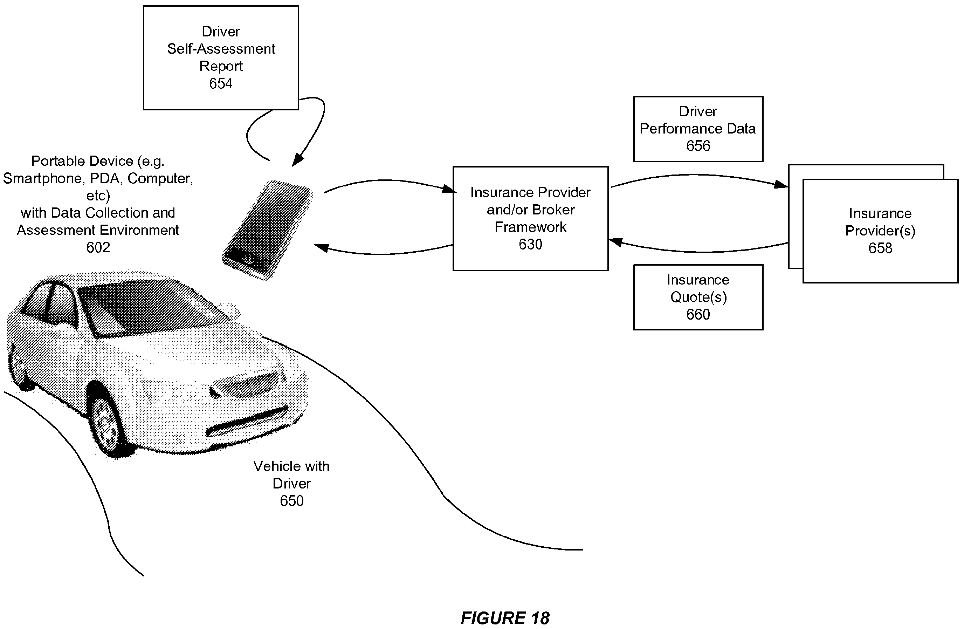

**Figure 18** illustrates use of a system for characterizing driver performance. As shown in Figure 18, during use, a driver of a vehicle 650 can use their portable device (e.g., a smartphone, PDA, computer, or other device) suitably equipped with a data collection and assessment environment, to track their driving performance, either for their own use 654, or to communicate the information to an insurance provider and/or broker framework for use in determining an insurance quote, or act as a broker/aggregator in inviting 656 other insurance providers 658 to offer 660 an insurance quote. This allows the insurance quote to be better personalized to the driver themselves.

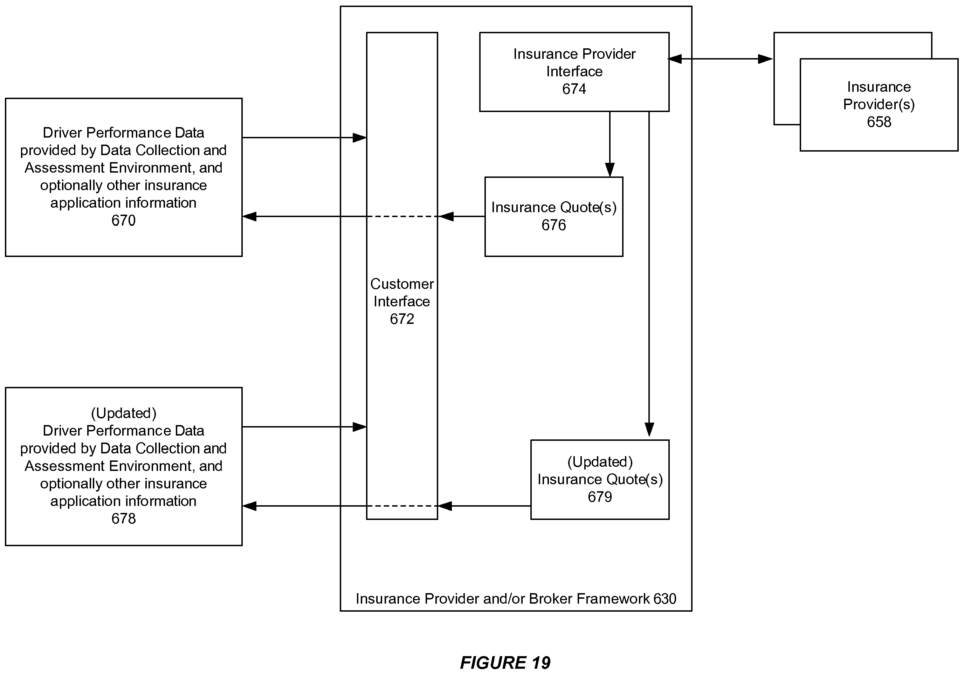

**Figure 19** illustrates use of an insurance provider and/or broker framework. As shown in Figure 19, an insurance provider and/or broker framework includes a customer interface 672 that allows a driver to communicate their driving performance information 670, and an insurance provider interface 674 that enables the insurance provider and/or broker to invite 656 other insurance providers 658 to offer an insurance quote 676 personalized to the driver. As described previously, the information received from a driver's data collection and assessment environment can be secured and/or anonymized prior to determining the driver's insurance quote, or inviting other insurance providers to offer an insurance quote. At a later point in time, the driver can provide updated driver performance data 678, and receive an updated insurance quote(s) 679 as required.

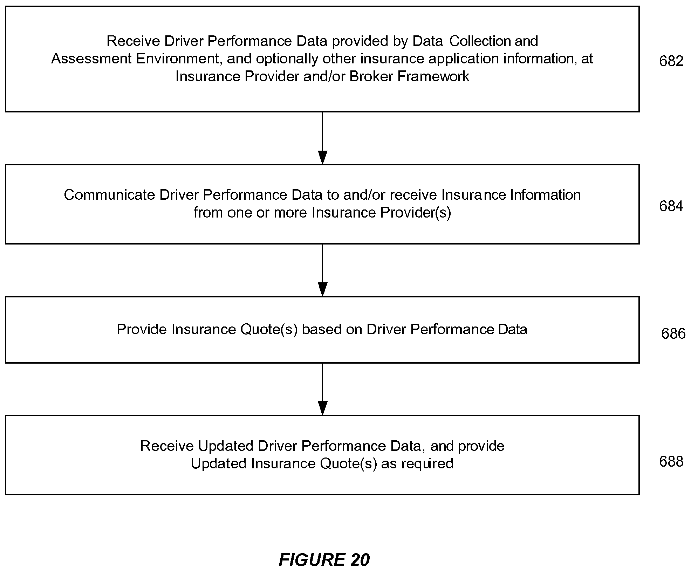

**Figure 20** is a flowchart of a method for characterizing driver performance and use in determining insurance coverage. As shown in Figure 20, at step 682, the system receives driver performance data provided by a data collection and assessment environment, and optionally other insurance application information, at an insurance provider and/or broker framework. At step 684, the system communicates driver performance data to and/or receives insurance information from one or more insurance provider(s). At step 686, insurance quote(s) are provided based on the driver performance data. At step 688, the system can receive updated driver performance data, and provide updated insurance quote(s) as required.

A risk score can be calculated on the portable device (e.g., smartphone, PDA, computer or other device) itself. Alternatively, raw data or information can be collected from the portable device and uploaded to a driver rating platform for risk score calculation, resulting in a score that can then either be provided directly to the insurance provider, or reported back to the insured, for their use in applying for insurance coverage.

### USE OF CARBON EMISSIONS IN CHARACTERIZING DRIVER PERFORMANCE

Described herein is a system and method for use of carbon emissions in characterizing driver performance and using such characterization to determine a profile associated with a particular insured. The profile can then be used to determine an insurance premium for the insured.

A driver can use a portable device equipped with a data collection and assessment environment, including one or more data collection devices that can be used to capture data and information or otherwise measure the carbon emissions associated with a vehicle. A framework (system) can use this information either to determine an insurance quote, or act as a broker/aggregator in inviting other insurance providers to offer an insurance quote, or usage based insurance quote (UBI).

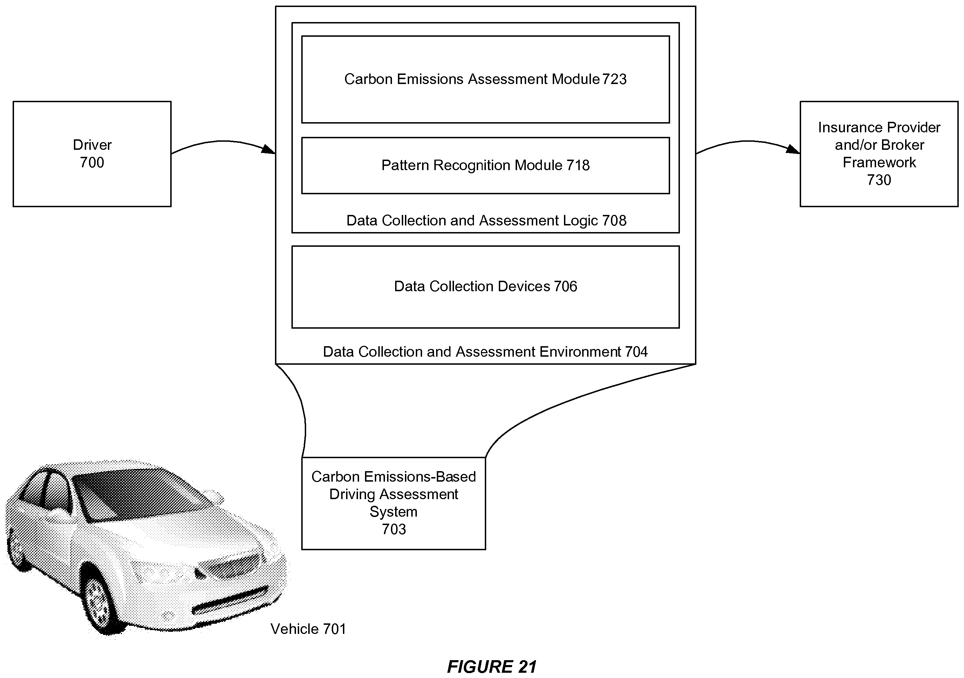

**Figure 21** illustrates a system for use of carbon emissions in characterizing vehicle driver performance and use in determining insurance coverage

The amount of carbon emissions a particular vehicle generates is dependent on a variety of factors, such as the type of vehicle and its overall condition, environmental conditions, and the manner in which the vehicle is operated. For example, a vehicle driven at high speeds may generate more emissions than a vehicle driven at moderate speeds.

As shown in Figure 21, a driver 700 of a vehicle 701 can use a carbon emissions-based driving assessment system 703, which can be provided as a portable device (e.g., a smartphone, PDA, computer, or other portable device), and which is equipped with a data collection and assessment environment 704.

The assessment system can itself include one or more data collection devices 706 (e.g., accelerometers, GPS, or other measurement devices) that can be used to capture data and information or otherwise measure vehicle actions, together with a data collection and assessment logic 708. A pattern recognition module 718 is configured with one or more defined operating patterns, each of which operating patterns reflects either a known change in vehicle status, or a known vehicle operating or driving behavior. For example, a vehicle responds in a physically-measurable manner to driver-based driving actions, e.g., by the driver turning the vehicle sharply at a corner. This enables the system to associate patterns with certain driving behaviors.

A carbon emissions assessment module 723 includes information about typical carbon emissions, and can compare current patterns of driving with known patterns to calculate carbon emissions for a current driver/vehicle.

The resultant information can be remotely communicated to an external insurance provider and/or broker framework (system) 730, which uses the received information in comparing the calculated carbon emissions against estimated carbon emissions for similar types of vehicle, which is indicative of the driver's driving profile, and using the results in determining insurance quotes for the current vehicle/driver, or inviting other insurance providers to offer an insurance quote, or a usage based insurance quote (UBI).

The system can incorporate or utilize additional functionality as further described in U.S. Patent Application titled "SYSTEM AND METHOD FOR USE OF PATTERN RECOGNITION IN ASSESSING OR MONITORING VEHICLE STATUS OR OPERATOR DRIVING BEHAVIOR"; Application No. 13/679,722, filed November 16, 2012, which claims the benefit of priority to U.S. Provisional Patent Application No. 61/578,511, filed December 21, 2011.

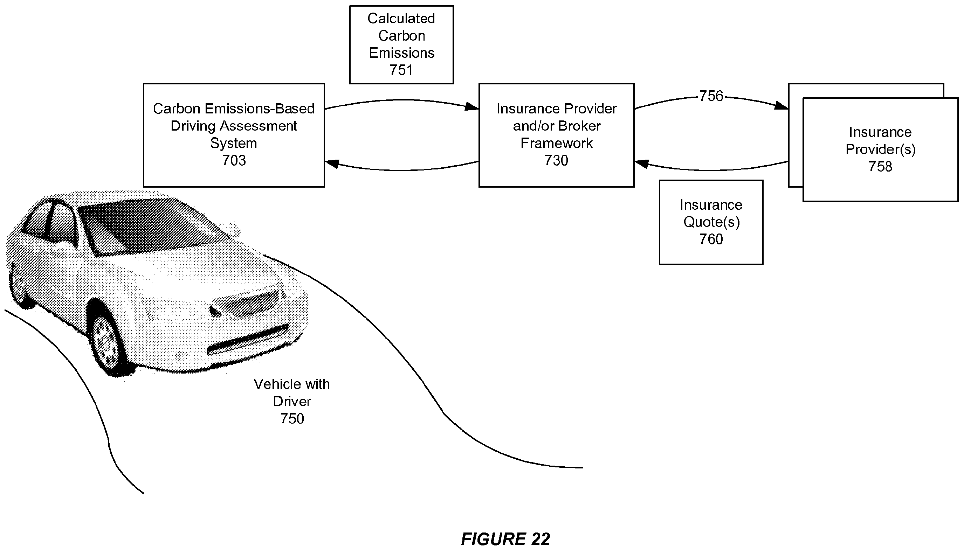

**Figure 22** illustrates use of a system for characterizing driver performance. As shown in Figure 22, during use, a driver of a vehicle 750 can use the carbon emissions-based driving assessment system to calculate carbon emissions for the current driver/vehicle, and to communicate 751 the information to an insurance provider and/or broker framework for use in determining an insurance quote, or act as a broker/aggregator in inviting 756 other insurance providers 758 to offer an insurance quote 760.

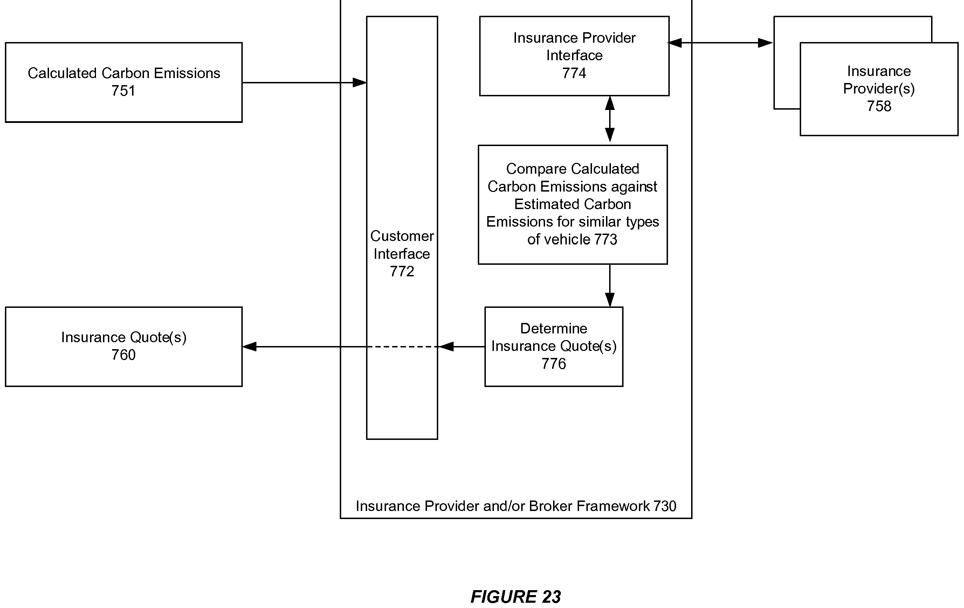

**Figure 23** illustrates use of an insurance provider and/or broker framework. As shown in Figure 23, an insurance provider and/or broker framework includes a customer interface 772 that allows a driver to communicate their calculated carbon emissions, and an insurance provider interface 774 that enables the insurance provider and/or broker to invite other insurance providers to offer 776 an insurance quote personalized to the driver, based on a comparison 773 of the calculated carbon emissions against estimated carbon emissions for similar types of vehicle. The information received from the carbon emissions-based driving assessment system can be secured and/or anonymized prior to determining the driver's insurance quote, or inviting other insurance providers to offer an insurance quote.

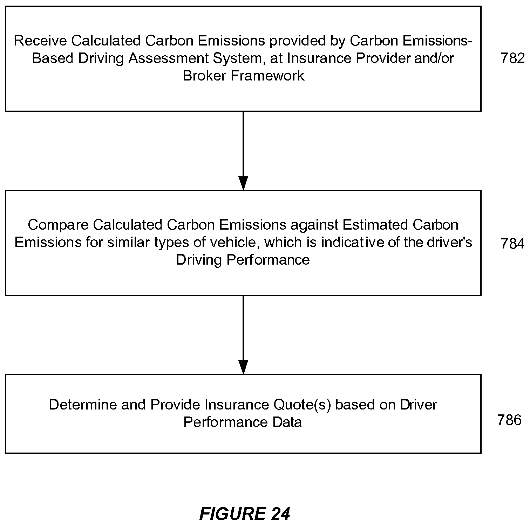

**Figure 24** is a flowchart of a method for use of carbon emissions in characterizing driver performance and use in determining insurance coverage
. As shown in Figure 24, at step 782, the system receives calculated carbon emissions provided by the carbon emissions-based driving assessment system, at the insurance provider and/or broker framework. At step 784, the system compares calculated carbon emissions against estimated carbon emissions for similar types of vehicle, which is indicative of the driver's driving profile. At step 786, the system determines and provides insurance quote(s) based on the calculated carbon emissions for the driver/vehicle.

The present invention may be conveniently implemented using one or more conventional general purpose or specialized digital computers or microprocessors programmed according to the teachings of the present disclosure, or a portable device (e.g., a smartphone, PDA, computer or other device), equipped with a data collection and assessment environment, including one or more data collection devices (e.g., accelerometers, GPS). Appropriate software coding can readily be prepared by skilled programmers based on the teachings of the present disclosure, as will be apparent to those skilled in the software art.

In some examples, the present invention includes a computer program product which is a non-transitory storage medium (media) having instructions stored thereon/in which can be used to program a computer to perform any of the processes of the present invention. The storage medium can include, but is not limited to, any type of disk including floppy disks, optical discs, DVD, CD-ROMs, microdrive, and magnetooptical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of the present invention has been provided for the purposes of illustration and description. It is not intended to be exhaustive or to limit the invention to the precise forms disclosed. The examples were chosen and described in order to best explain the principles of the invention and its practical application, thereby enabling others skilled in the art to understand the invention
with various modifications that are suited to the particular use contemplated. For example, although the illustrations provided herein primarily describe using vehicles, it will be evident that the techniques described herein can be similarly used with, e.g., trains, ships, airplanes, containers, or other moving equipment, and with other types of data collection devices. It is intended that the scope of the invention be defined by the following claims.

## Claims

1. A system which uses pattern recognition in assessing or monitoring vehicle embarkment or disembarkment, comprising:
a data collection and assessment system (104, 142, 260, 272, 404) mounted to the interior of a vehicle (102, 140, 402) comprising one or more data collection devices (106, 144, 406) that can be used to capture data and information, or otherwise measure vehicle actions, wherein the one or more data collection devices (106, 144, 406) comprise one or more accelerometers (110, 280, 408);
a data communication module (116, 148, 416) which enables communication of the collected data and information, such as through the use of telematics, to one or more other systems;
a pattern recognition module (118, 162, 300) configured with one or more defined operating patterns (120, 163) that each reflect a known change in vehicle status based on accelerometer data, and wherein the known change in vehicle status corresponds to when an operator (100) or a passenger has embarked or disembarked the vehicle (102, 140, 402);
an operator assessment and monitoring module (122, 164) which includes information about one or more vehicle operators, including for each operator an identifier (124, 166) and additional data or information (126, 166) describing that operator and/or their typical operating characteristics; and
wherein accelerometer data indicative of a current vehicle status is compared to the one or more defined operating patterns (120, 163) to identify a known change in vehicle
corresponding to when an operator (100) or a passenger has embarked or disembarked the vehicle (102), and the results of the comparison are used in providing operator feedback and/or updating operator profile data and/or providing other services such as assessment or monitoring of operator behaviour.

2. The system of claim 1, wherein
the pattern recognition module (118, 162, 300) compares the accelerometer data to the one or more defined operating patterns (120, 163) so as to match the one or more acceleration components measured to a known vehicle embarkment or disembarkment.

3. The system of claim 1, wherein resultant information, pattern matching, or driver feedback can be communicated to an operator assessment and monitoring system or service (160, 262), which can provide additional functionality, such as ensuring a driver's compliance with employment or other mandated driving requirements, or assessing a driver's suitability for insurance reasons.

4. The system of claim 1, wherein the operator assessment and monitoring module (122, 164) includes information about a plurality of vehicle operators (100), including for each operator an identifier (124, 166) and additional data or information (126, 166) describing that operator or their operating characteristics.

5. The system of claim 1, wherein the captured data and information is collected from a plurality of accelerometers (110, 280, 408), and collectively used to provide a current vehicle status/ operator driving behaviour data.

6. The system of claim 5, wherein the accelerometers (110, 280, 408) can detect the minor accelerations in the vehicle (102) when a person enters the car and closes the door, takes a corner or brakes sharply, or drives in a manner considered unsafe.

7. The system of claim 1 for use in assessing or monitoring a status of a vehicle (102) or other equipment, or operator (100) thereof, wherein:
the data collection and assessment system (104, 142, 260, 272, 404) comprising one or more data collection devices (106, 274), collects information from the one or more accelerometers (110, 280, 408) as the vehicle (102, 140, 402) or other equipment is moving; and the system further comprises a frame determination module (418) which samples or otherwise receives accelerometer data over a period of time, and also information from one or more other on-board devices, and uses this information to determine a rotation matrix (424) that reflects the skew between the accelerometer's orientation, and the vehicle's true orientation or direction in three-dimensions, and to determine a frame of reference (430) for use in subsequently characterizing motions of the vehicle or other equipment in three dimensions.

8. The system of claim 7, wherein the data communication module(116, 148, 278, 416) enables communication of the collected information, and vehicle motion characterizations, to one or more other systems.

9. The system of claim 8, wherein the collected information, and vehicle motion characterizations are used together with pattern matching as part of an operator assessment and monitoring system or service (160).

10. The system of claim 9, wherein the frame determination module (418) determines the frame of reference by sampling the accelerometer data, and first determining averages over a period of time, to determine the moving vehicle or other equipment's x-y plane, and then averaging the accelerometer data over several braking instances to determine an x-axis, y-axis and z-axis for the moving vehicle or other equipment.

11. The system of claim 10, wherein the x-axis, y-axis and z-axis determinations are stored as a rotation matrix, and used to subsequently characterize motions of the moving vehicle or other equipment in three dimensions.

12. The system of claim 1 for use in characterizing vehicle driver performance comprising:
a data collection and assessment environment, including one or more data collection devices (106, 274) that can be used to capture data and information or otherwise measure vehicle actions,
a data collection and assessment logic, and
a carbon emissions assessment module which includes information about typical carbon emissions, and can compare current patterns of driving with known patterns to calculate carbon emissions for a current driver/vehicle; and wherein the data collection and assessment environment is configured to do one or more of the following:
(i) compare current patterns of driving with known patterns to calculate carbon emissions for a current driver/vehicle, and
(ii) provide the information to an external insurance provider or broker framework to calculate a driver profile, for use in obtaining a usage based insurance quote (UBI) for the driver.

## Patentansprüche

1. Ein System, das für die Bewertung oder Kontrolle von Fahrzeugein- oder -ausstiegen eine Mustererkennung verwendet, umfassend:
einem Datenerhebungs- und Bewertungssystem (104, 142, 260, 272, 404), das im Inneren eines Fahrzeugs (102, 140, 402) montiert ist, mit einem oder mehreren Datenerhebungsgeräten (106, 144, 406), das für die Erfassung von Daten und Informationen verwendet werden kann oder anderweitig Fahrzeugaktionen misst, wobei ein oder mehrere Datenerhebungsgeräte (106, 144, 406) einen oder mehrere Beschleunigungssensoren (110, 280, 408) umfassen;
einem Datenkommunikationsmodul (116, 148, 416), das die Kommunikation der erhobenen Daten und Informationen durch die Nutzung von Telematik an ein oder mehrere andere Systeme ermöglicht;
ein Mustererkennungsmodul (118, 162, 300) mit einem oder mehreren definierten Betriebsmustern (120, 163), die jeweils eine bekannte Veränderung des Fahrzeugstatus basierend auf Daten des Beschleunigungssensors darstellen, und wobei die bekannte Veränderung des Fahrzeugstatus dem Ein- oder Aussteigen eines Betreibers (100) oder Passagiers in bzw. aus das Fahrzeug (102, 140, 402) entspricht;
ein Betreiberbewertungs- und Überwachungsmodul (122, 164), das Informationen über einen oder mehrere Fahrzeugbetreiber beinhaltet, einschließlich einer Kennung (124, 166) für jeden Betreiber und zusätzliche Daten oder Informationen (126, 166), die diesen Betreiber und/oder dessen typische Betriebseigenschaften beschreiben; und
wobei Daten des Beschleunigungssensors, die einen aktuellen Fahrzeugstatus angeben, mit einem oder mehr definierten Betriebsmustern (120, 163) verglichen werden, um eine bekannte Veränderung des Fahrzeugstatus zu identifizieren, die dem Ein- oder Aussteigen eines Betreibers (100) oder Passagiers in das Fahrzeug (102) entspricht, und die Ergebnisse dieses Vergleichs verwendet werden, um dem Betreiber Feedback zu geben und/oder Betreiberprofildaten zu aktualisieren, und/oder um andere Dienste, wie z. B. die Bewertung oder Überwachung des Betreiberverhaltens zur Verfügung zu stellen.

2. Das System nach Anspruch 1, wobei
das Mustererkennungsmodul (118, 162, 300) die Daten des Beschleunigungssensors mit dem einen oder mehreren definierten Betriebsmustern (120, 163) vergleicht, um die eine oder mehrere Beschleunigungskomponenten für einen bekannten Fahrzeugein- oder -ausstieg zu vergleichen.

3. Das System nach Anspruch 1, bei dem die gewonnenen Informationen, Mustervergleiche oder Fahrer-Feedbacks an ein Betreiberbewertungs- und Überwachungssystem oder -service (160, 262) kommuniziert werden können, um sicherzustellen, dass ein Fahrer die Beschäftigungs- oder vorgegebenen Fahranforderungen erfüllt, oder um die Eignung des Fahrers aus Versicherungsgründen zu bewerten.

4. Das System nach Anspruch 1, bei dem das Betreiberbewertungs- und Überwachungsmodul (122, 164) Informationen über mehrere Fahrzeugbetreiber (100) beinhaltet, einschließlich einer Kennung (124, 166) für jeden Betreiber und zusätzliche Daten oder Informationen (126, 166), die diesen Betreiber oder dessen Betriebseigenschaften beschreiben.

5. Das System nach Anspruch 1, bei dem die erfassten Daten und Informationen von mehreren Beschleunigungssensoren (110, 280, 408) erfasst und gemeinsam genutzt werden, um einen aktuellen Fahrzeugstatus/Daten über das Fahrverhalten des Betreibers zu erstellen.

6. Das System nach Anspruch 5, bei dem die Beschleunigungssensoren (110, 280, 408) die minimalen Beschleunigungen des Fahrzeugs (102) erkennen kann, die entstehen, wenn eine Person in das Auto einsteigt und die Tür schließt, um eine Kurve fährt, stark bremst oder in auf eine als gefährlich eingestufte Art und Weise fährt.

7. Das System nach Anspruch 1 zur Verwendung bei der Bewertung und Überwachung des Status eines Fahrzeugs (102), anderer Ausstattung oder dessen Betreibers (100), wobei:
Das Datenerhebungs- und Bewertungssystem (104, 142, 260, 272, 404), das ein oder mehrere Datenerhebungsgeräte (106, 274) beinhaltet, Informationen von einem oder mehr Beschleunigungsmessern (110, 280, 408) erfasst, wenn das Fahrzeug (102, 140, 402) oder andere Ausstattung in Bewegung ist; und das System darüber hinaus ein Rahmenerkennungsmodul (418) enthält, das Daten des Beschleunigungssensors sowie Informationen von einem oder mehreren On-Board-Geräten über einen bestimmten Zeitraum testet oder anderweitig erfasst und diese Informationen nutzt, um eine Rotationsmatrix (424) zu bestimmen, die den Versatz zwischen der Ausrichtung des Beschleunigungssensors und der tatsächlichen Ausrichtung oder Richtung des Fahrzeugs in drei Dimensionen misst, um einen Referenzrahmen (430) zur Verwendung in späteren, charakteristischen Bewegungen des Fahrzeugs oder anderer Ausstattung in drei Dimensionen zu bestimmen.

8. Das System nach Anspruch 7, bei dem das Datenkommunikationsmodul (116, 148, 278, 416) die Kommunikation der erfassten Informationen und Fahrzeugbewegungsmerkmale an ein oder mehrere andere Systeme kommuniziert.

9. Das System nach Anspruch 8, bei dem die erhobenen Informationen und Fahrzeugbewegungsmerkmale zusammen mit Mustervergleichen als Teil einer Betreiberbewertung und eines Überwachungssystems oder -dienstes (160) verwendet werden.

10. Das System nach Anspruch 9, bei dem das Rahmenerkennungsmodul (418) den Referenzrahmen bestimmt, indem die Daten des Beschleunigers geprüft und Durchschnittswerte über einen bestimmten Zeitraum erstellt werden, um die x-y-Fläche des fahrenden Fahrzeugs oder einer anderen Ausrüstung zu bestimmen und dann Durchschnittswerte der Daten des Beschleunigungssensors über mehrere Bremsinstanzen zu bilden, um eine x-Achse, y-Achse und z-Achse für das fahrende Fahrzeug oder eine andere Ausrüstung zu bestimmen.

11. Das System nach Anspruch 10, bei dem die Werte der x-Achse, y-Achse und z-Achse als Rotationsmatrix gespeichert und verwendet werden, um im Anschluss die Bewegungen des fahrenden Fahrzeugs oder einer anderer Ausrüstung in drei Dimensionen zu kennzeichnen.

12. Das System nach Anspruch 1 zur Verwendung der Bestimmung der Fahrerleistung, umfassend:
eine Datenerhebungs- und Bewertungsumgebung, einschließlich einer oder mehrerer Datenerhebungsgeräte (106, 274), die verwendet werden können, um Daten und Informationen zu erfassen oder Fahrzeugaktionen anderweitig zu messen,
eine Datenerhebungs- und Bewertungslogik sowie
ein Bewertungsmodul für Kohlenstoffemissionen, das Informationen über typische Kohlenstoffemissionen beinhaltet und aktuelle Fahrmuster mit bekannten Fahrmustern vergleichen kann, um Kohlenstoffemissionen für einen aktuellen Fahrer/Fahrzeug zu berechnen; und bei dem die Datenerhebungs- und Bewertungsumgebung konfiguriert ist, eine oder mehrere der folgenden Schritte vorzunehmen:
(i) Vergleich aktueller Fahrmuster mit bekannten Fahrmustern, um Kohlenstoffemissionen für einen aktuellen Fahrer/Fahrzeug zu berechnen, und
(ii) Bereitstellung von Informationen an einen externen Versicherungsanbieter oder einen Maklerrahmenvertrag zur Berechnung eines Fahrerprofils für den Zweck, ein nutzungsbasiertes Versicherungsangebot (UBI) für den Fahrer zu erhalten.

## Revendications

1. Système qui utilise la reconnaissance de formes dans l'évaluation ou la surveillance de l'embarquement ou débarquement à bord d'un véhicule, comprenant :
un système de collecte et d'évaluation de données (104, 142, 260, 272, 404) monté à l'intérieur d'un véhicule (102, 140, 402) comprenant un ou plusieurs dispositifs de collecte de données (106, 144, 406) qui peuvent être utilisés pour saisir des données et des informations, ou autrement mesurer des actions du véhicule, où le ou les dispositifs de collecte de données (106, 144, 406) comprennent un ou plusieurs accéléromètres (110, 280, 408) ;
un module de communication de données (116, 148, 416) qui permet la communication des données et des informations collectées, par exemple, par l'utilisation de la télématique, vers un ou plusieurs autres systèmes ;
un module de reconnaissance de formes (118, 162, 300) configuré avec un ou plusieurs modèles de fonctionnement définis (120, 163) qui reflètent chacun un changement connu dans l'état du véhicule sur la base des données de l'accéléromètre, et où le changement connu de l'état du véhicule correspond au moment où un conducteur (100) ou un passager a embarqué à bord du véhicule ou débarqué de celui-ci (102, 140, 402) ;
un module d'évaluation et de surveillance de conducteur (122, 164) comprenant des informations sur un ou plusieurs conducteurs de véhicule, comprenant, pour chaque conducteur, un identifiant (124, 166) et des données ou informations supplémentaires (126, 166) décrivant ce conducteur et/ou ses caractéristiques de fonctionnement typiques ; et
où des données de l'accéléromètre indicatives d'un état actuel du véhicule sont comparées à un ou plusieurs modèles de fonctionnement définis (120, 163) pour identifier un changement connu dans l'état du véhicule correspondant au moment où un conducteur (100) ou un passager a embarqué dans le véhicule (102) ou débarqué de celui-ci, et les résultats de la comparaison sont utilisés pour la fourniture d'une rétroaction de conducteur et/ou une mise à jour des données de profil de conducteur et/ou la fourniture d'autres services tels que l'évaluation ou la surveillance du comportement du conducteur.

2. Système selon la revendication 1, dans lequel le module de reconnaissance de formes (118, 162, 300) compare les données de l'accéléromètre au ou aux plusieurs modèles de fonctionnement définis (120, 163) afin de faire correspondre la ou les composantes d'accélération mesurées à un embarquement ou un débarquement de véhicule connu.

3. Système selon la revendication 1, dans lequel les informations résultantes, l'appariement de modèles ou la rétroaction de conducteur peuvent être communiqués à un système ou service d'évaluation et de surveillance de conducteur (160, 262) qui peut fournir des fonctionnalités supplémentaires, par exemple, l'assurance que le conducteur respecte les exigences professionnelles ou autres en matière de conduite, ou l'évaluation de l'aptitude d'un conducteur pour des raisons d'assurance.

4. Système selon la revendication 1, dans lequel le module d'évaluation et de surveillance de conducteur (122, 164) comprend des informations concernant une pluralité de conducteurs de véhicule (100), incluant pour chaque conducteur un identifiant (124, 166) et des données ou informations supplémentaires (126, 166) décrivant ce conducteur ou ses caractéristiques de fonctionnement.

5. Système selon la revendication 1, dans lequel les données et informations saisies sont collectées à partir d'une pluralité d'accéléromètres (110, 280, 408), et utilisées collectivement pour fournir un état actuel du véhicule/des données sur le comportement de conduite du conducteur.

6. Système selon la revendication 5, dans lequel les accéléromètres (110, 280, 408) peuvent détecter les petites accélérations dans le véhicule (102) lorsqu'une personne entre dans la voiture et ferme la porte, prend un virage ou freine brusquement, ou conduit d'une manière considérée comme dangereuse.

7. Système selon la revendication 1 destiné à une utilisation dans l'évaluation ou la surveillance d'un état d'un véhicule (102) ou d'un autre équipement, ou d'un conducteur (100) de celui-ci, dans lequel :
le système de collecte et d'évaluation de données (104, 142, 260, 272, 404) comprenant un ou plusieurs dispositifs de collecte de données (106, 274), recueille des informations provenant du ou des accéléromètres (110, 280, 408) pendant que le véhicule (102, 140, 402) ou d'autres équipements sont en mouvement ; et le système comprend en outre un module de détermination de trame (418) qui échantillonne ou reçoit des données d'accéléromètres sur un intervalle de temps, ainsi que des informations provenant d'un ou plusieurs autres dispositifs embarqués, et utilise cette information pour déterminer une matrice de rotation (424) qui reflète l'inclinaison entre l'orientation de l'accéléromètre et l'orientation ou la direction réelle du véhicule en trois dimensions, et pour déterminer un cadre de référence (430) à utiliser pour caractériser ultérieurement les mouvements du véhicule ou d'autres équipements en trois dimensions.

8. Système selon la revendication 7, dans lequel le module de communication de données (116, 148, 278, 416) permet la communication d'informations collectées et de caractérisations de mouvements de véhicule vers un ou plusieurs autres systèmes.

9. Système selon la revendication 8, dans lequel les informations collectées, et les caractérisations de mouvement de véhicule sont utilisées conjointement avec un appariement de modèle en tant que partie d'un système ou service d'évaluation et de surveillance de conducteur (160).

10. Système selon la revendication 9, dans lequel le module de détermination de trame (418) détermine le cadre de référence en échantillonnant les données d'accéléromètres, et détermine en premier des moyennes sur un intervalle de temps, pour déterminer le plan x-y du véhicule en mouvement ou d'un autre équipement, puis calcule la moyenne des données d'accéléromètres au cours de plusieurs instances de freinage pour déterminer un axe des x, un axe des y et un axe des z pour le véhicule en mouvement ou d'autres équipements.

11. Système selon la revendication 10, dans lequel les déterminations de l'axe des x, de l'axe des y et de l'axe des z sont mémorisées sous la forme d'une matrice de rotation, et utilisées pour caractériser ensuite les mouvements du véhicule en mouvement ou d'autres équipements en trois dimensions.

12. Système selon la revendication 1 destiné à une utilisation dans la caractérisation de la performance d'un conducteur de véhicule comprenant :
un environnement de collecte et d'évaluation de données, incluant un ou plusieurs dispositifs de collecte de données (106, 274) qui peuvent être utilisés pour saisir des données et des informations ou autrement mesurer les actions du véhicule,
une logique de collecte et d'évaluation des données, et
un module d'évaluation des émissions de carbone qui inclut des informations sur les émissions de carbone types, et qui permet de comparer les modèles actuels de conduite avec des modèles connus pour calculer les émissions de carbone d'un conducteur/véhicule actuel ; et où l'environnement de collecte et d'évaluation de données est configuré pour l'une ou plusieurs des actions suivantes :
(i) de comparaison de modèles actuels de conduite avec des modèles connus pour calculer les émissions de carbone d'un conducteur/véhicule actuel, et
(ii) de fourniture de l'information à un fournisseur d'assurance externe ou à un cadre de courtage pour calculer un profil de conducteur, à utiliser pour l'obtention d'un devis d'assurance basé sur l'usage (UBI) pour le conducteur.
